# DEMANDE DE BREVET EUROPEEN

(11) **EP 0 668 190 A1**
(43) Date de publication de la demande: **23.08.1995**
(21) Numéro de dépôt: 95400329.9
(22) Date de dépôt: 16.02.1995
(51) Int. Cl.: B60R 7/06

(54) **Planche de bord avec module de rangement**

(30) Priorité: 22.02.1994 FR 9401958
(71) Demandeur: REGIE NATIONALE DES USINES RENAULT S.A., F-92109 Boulogne Billancourt (FR); MATRA AUTOMOBILES SA, F-78191 Trappes Cédex (FR)
(72) Inventeur: Milenovich, Milen, F-94230 Cachan (FR); Dedenis, Michel, F-91140 Villebon S/Yvette (FR)
(74) Mandataire: Ernst-Schonberg, Michel

(57) **Abrégé**

Planche de bord avec module de rangement intégré fermé par un premier couvercle (16) monté à pivotement sur le module et reposant sur une butée (37) et par un deuxième couvercle (18) porteur d'un mécanisme de verrouillage monté à pivotement autour d'axes (19) portés par les parois latérales (33) dudit module, caractérisée par le fait que le mécanisme de verrouillage est porté par une armature (50) immobilisée entre les parois opposées (181, 182) assemblées du deuxième couvercle (18) et possède un organe d'actionnement (52) d'un palonnier attelé à des verrous latéraux (63) d'immobilisation du couvercle au contact de deux parois latérales adjacentes au module, et que ladite armature (50) se prolonge à l'extérieur dudit couvercle pour former des jonctions avec des bras d'articulation (21) latéraux de ce couvercle (18).

## Description

L'invention concerne une planche de bord avec module de rangement dans laquelle un plateau arrière est limité par un bord transversal qui s'étend notamment devant une rangée de sièges de passagers du véhicule.

On qualifiera dans la description et les revendications par "avant" les éléments et parties de la planche de bord dirigés vers la base du pare-brise du véhicule et par "arrière" les éléments et parties de la planche de bord dirigés vers le siège du véhicule.

La publication US-A-4355837 décrit un module de rangement intégré dans une planche de bord dans laquelle une tablette possède un bord avant et un bord arrière. Un premier couvercle est monté à pivotement sur le module et repose sur un support localisé au dessus du bord avant de la tablette. Un deuxième couvercle est monté à pivotement autour d'un axe adjacent au bord arrière du support et les deux couvercles facilitent en combinaison la préhension et le rangement d'objets dans le module.

Un agencement de la tablette dans le module permet l'aménagement de volumes de rangement distincts susceptibles d'être isolés l'un par rapport à l'autre.

L'invention a pour objet un dispositif de verrouillage d'un couvercle du module de rangement qui autorise la manoeuvre d'ouverture et de fermeture de l'autre couvercle.

L'invention a également pour objet un dispositif de verrouillage d'un couvercle du module de rangement et l'ouverture du couvercle permet l'effacement d'une butée de l'autre couvercle dans le but d'autoriser la manoeuvre dudit couvercle vers une position d'ouverture au contact de la paroi avant du module.

Selon l'invention le mécanisme de verrouillage est porté d'une part par une armature immobilisée entre les parois opposées assemblées du deuxième couvercle et possède un doigt d'actionnement d'un palonnier attelé à des verrous latéraux d'immobilisation du couvercle au contact de deux parois latérales adjacentes du module et ladite armature se prolonge d'autre part à l'extérieur dudit couvercle pour former des jonctions avec des bras d'articulation latéraux du couvercle.

Selon une autre caractéristique de l'invention, le premier couvercle est supporté par deux platines latérales de fixation qui portent notamment l'axe d'articulation dudit couvercle et au moins une butée effaçable dans une paroi latérale du module et accessible par l'ouverture du module masquée par le deuxième couvercle.

Le module de rangement intégré à la planche de bord est ainsi fermé par des couvercles préassemblés avec leurs éléments de commande et dispositifs de verrouillage.

D'autres caractéristiques et avantages de l'invention apparaîtront à la lecture de la description d'un exemple de réalisation de la planche de bord équipée du module de rangement en référence au dessin annexé dans lequel :
- la figure 1 est une représentation perspective de la planche de bord équipée du module de rangement,
- la figure 2 est une vue en coupe du module de rangement selon la ligne II-II de la figure 1,
- la figure 3 est une demie vue en élévation de l'armature du deuxième couvercle,
- les figures 4, 5, sont des vues en coupe du deuxième couvercle selon les lignes IV-V de la figure 3.

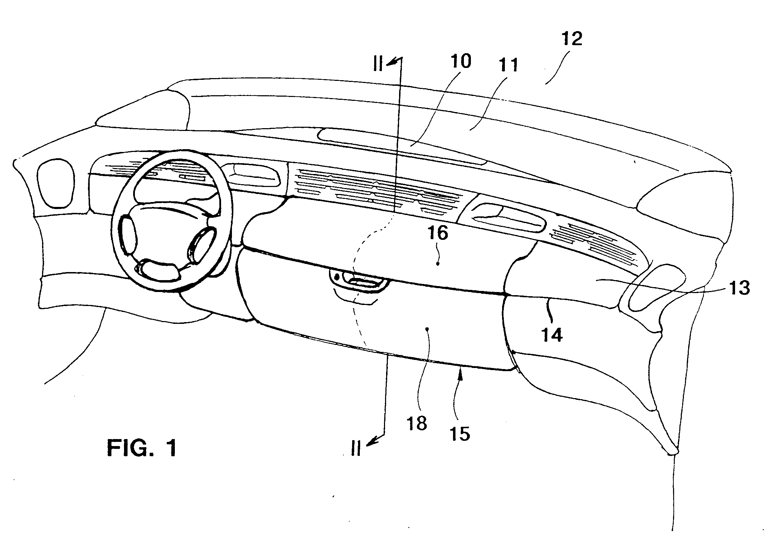

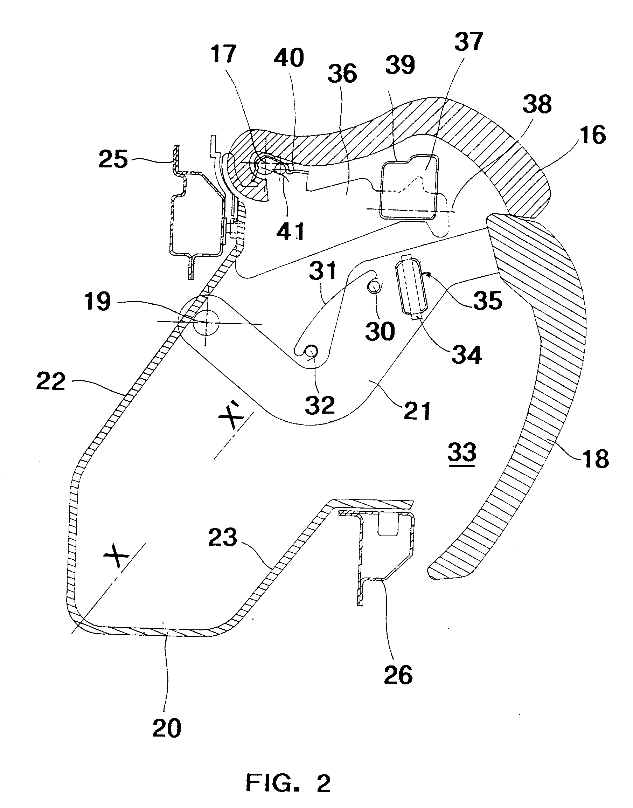

Ainsi que cela est montré à la figure 1 et 2 qui illustre un mode de réalisation de la planche de bord, un tableau d'instrumentation 10 est coiffé par un plateau avant 11 qui s'étend transversalement le long de la base du pare-brise 12. Un plateau arrière 13 est limité par une face transversale 14 qui s'étend devant une rangée de sièges non représentée de passagers du véhicule.

Un module de rangement 15 est fermé à la fois par un premier couvercle 16 à commande manuelle monté à pivotement autour d'axes 17 portés par des platines latérales adjacentes au module, et par un deuxième couvercle 18 monté à pivotement autour de deux axes 19 portés par les parois latérales opposées 33 du module. A cet effet, le couvercle 18 est solidaire de deux bras d'articulation 21 montés sur les axes 19 et possède une ligne de jonction avec le bord transversal du premier couvercle 16.

Le module 15 est constitué par un boîtier 20 qui possède une section transversale en U en partie représenté à la figure 2 dont l'axe XX' est incliné vers l'arrière. L'ouverture du module est ainsi située dans le champ de vision du passager du véhicule dans une découpe de la face transversale 14 de la planche de bord devant un siège de passager.

Le boîtier 20 possède une paroi de fond et deux parois transversales opposées avant 22 et arrière 23 d'inégales hauteurs représentées sur la section de la figure 2.

La paroi avant 22 est immobilisée et en appui sur une traverse supérieure 25 tandis que la paroi arrière 23 est en appui sur une traverse inférieure 26.

On décrit dans ce qui suit :
1) Les moyens de montage du couvercle 18
   Chaque bras d'articulation 21 possède une configuration générale en col de cygne et porte l'ancrage 30 d'un ressort de rappel à lame 31 monté en tension entre l'ancrage 30 et un ancrage 32 porté par la paroi latérale 33 du boîtier 20. Le ressort 31 est un ressort à dépassement de point mort et occupe une position sensiblement détendue dans les positions respectives d'ouverture et de fermeture du couvercle 18.
   Le bras d'articulation 21 porte par ailleurs un dispositif de friction 35 constitué par une lame élastique 34 maintenue en tension de sorte à présenter une surface extérieure convexe de friction au contact de la paroi adjacente au module 15 et ralentit le mouvement de fermeture ou d'ouverture du couvercle 18.
2) Les moyens de montage du couvercle 16
   Le premier couvercle 16 entretoise deux platines fixes 36 respectivement vissées dans les parois latérales 33 à l'extérieur du boîtier 20. L'une des platines 36 porte une butée 37 articulée autour d'un axe 38 qui constitue l'appui du couvercle 16. La butée 37 est encastrée dans une fenêtre 39 portée par la paroi 33 et peut-être effacée lors de l'ouverture du module à la suite de l'abaissement du couvercle 18.
   La platine 36 porte également une oreille de maintien 40 de l'axe 17, ce dernier étant fixé à une armature support du couvercle 16. L'oreille 40 et la platine 36 délimitent de la sorte un palier support à friction constitué par une rampe inclinée 41 dont les extrémités constituent les butées respectives de l'axe 17 lorsque le couvercle 16 occupe une position ouverte ou fermée comme représentée à la figure 2.
3) Les moyens de commande de verrouillage et de déverrouillage du couvercle 18.

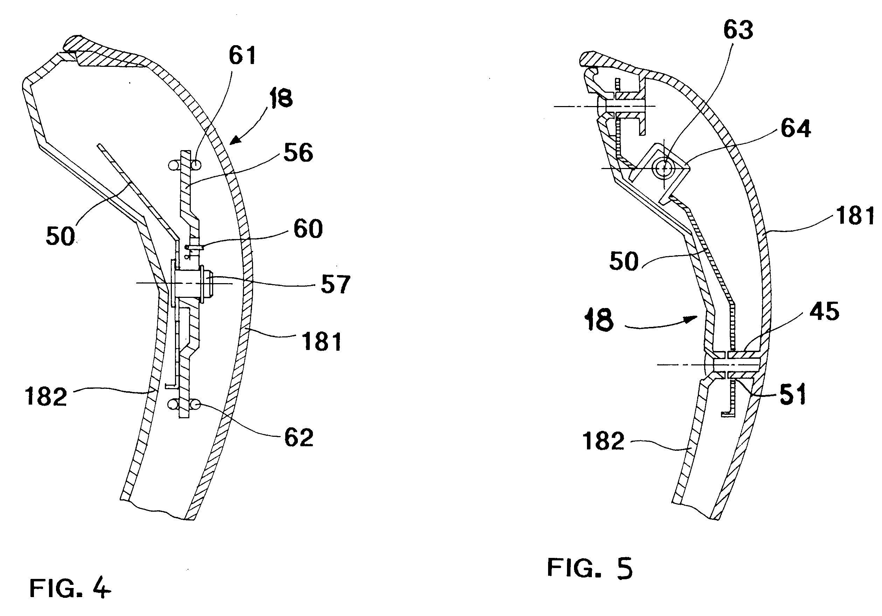

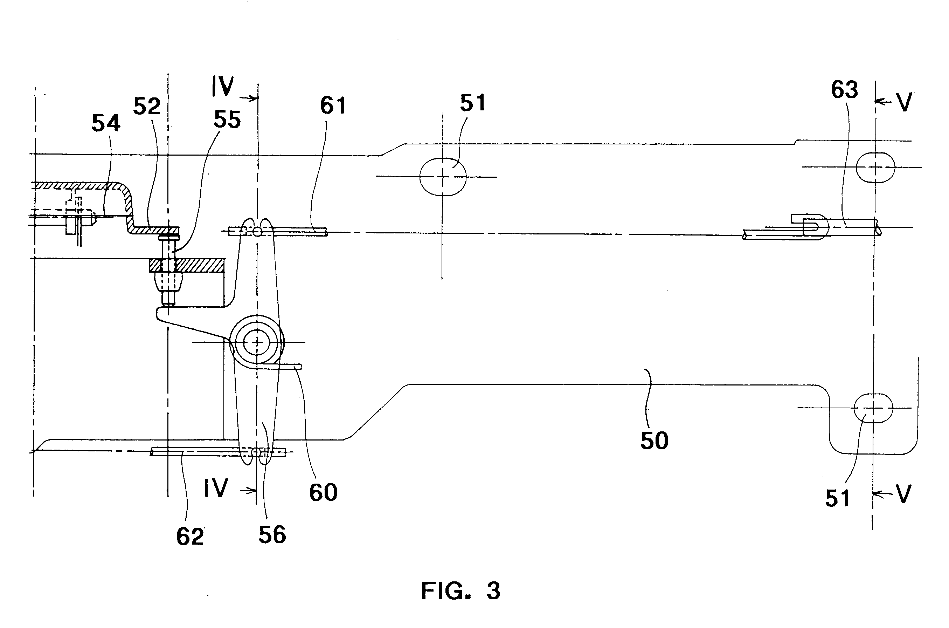

En référence des figures 3 à 5, on constate que le couvercle 18 possède une paroi extérieure arrière 181 et une paroi intérieure avant 182. Les parois 181-182 sont accolées et assemblées au niveau de bossages 45 et des nervures de rigidification de manière à constituer un corps creux de montage d'une armature 50.

Ainsi que cela est représenté à la figure 4, 5, l'armature 50 est immobilisée entre les parois opposées 181, 182 et maintenue par les bossages 45 de la paroi arrière. A cet effet l'armature 50 porte un certain nombre d'orifices de montage et de positionnement 51.

La paroi arrière 181 porte par ailleurs des découpes de montage d'un verrou à clé (non représenté) et d'une palette d'actionnement 52 à ressort de rappel montée à rotation autour d'un axe 54 porté par l'armature 50 (fig. 3).

La palette 52 est en appui latéral sur un doigt à ressort 55 qui actionne un palonnier 56 (fig. 3, 4) monté à rotation autour d'un axe 57 porté par l'armature 50 à l'encontre d'un effort de rappel élastique exercé par un ressort 60. Le palonnier 56 est attelé au moyen de tringles 61, 62 à des verrous latéraux 63 qui immobilisent le couvercle 18 en position fermée au contact des parois latérales adjacentes au module. Les verrous 63 sont à cet effet supportés par deux étriers 64 agrafés sur l'armature 50 ainsi que cela est montré à la figure 5.

Dans le but de faciliter le montage du couvercle 18 assemblé sur le boîtier 20, l'armature 50 est rigidement reliée aux bras d'articulation latéraux 21.

D'une manière analogue le couvercle 16 est également préassemblé avec les platines 36 dans le but de faciliter sa fixation sur les parois latérales 33 du boîtier 20.

Il ressort de la description que le module de rangement conforme à l'invention peut être rapidement incorporé dans la planche de bord au contact des traverses 25, 26 dans une position d'ouverture dans laquelle le deuxième couvercle 18 occupe une position abaissée.

## Revendications

**1)** Planche de bord avec module de rangement intégré fermé par un premier couvercle (16) monté à pivotement sur le module et reposant sur une butée (37) et par un deuxième couvercle (18) porteur d'un mécanisme de verrouillage monté à pivotement autour d'axes (19) portés par les parois latérales (33) dudit module, caractérisée par le fait que le mécanisme de verrouillage est porté par une armature (50) immobilisée entre les parois opposées (181, 182) assemblées du deuxième couvercle (18) et possède un organe d'actionnement (52) d'un palonnier attelé à des verrous latéraux (63) d'immobilisation du couvercle au contact de deux parois latérales adjacentes au module, et que ladite armature (50) se prolonge à l'extérieur dudit couvercle pour former des jonctions avec des bras d'articulation (21) latéraux de ce couvercle (18).

**2)** Planche de bord selon la revendication 1, caractérisée par le fait que l'armature (50) porte des étriers de positionnement (64) des verrous d'immobilisation (63).

**3)** Planche de bord selon la revendication 1, caractérisée par le fait que le deuxième couvercle (18) possède de manière en soi connue une ligne de jonction avec le bord transversal du premier couvercle (16) et que ce dernier couvercle (16) est supporté par deux platines latérales (36) de fixation qui portent notamment les axes d'articulation (17) dudit couvercle et au moins une butée effaçable (37) dans une paroi latérale (33) du module et accessible par l'ouverture du module masquée par le deuxième couvercle (18).

**4)** Planche de bord selon l'une quelconque des revendications 1 à 3, caractérisée par le fait que les bras d'articulation (21) du deuxième couvercle (18) et les platines latérales (36) de fixation du premier couvercle (16) portent des moyens de positionnement à friction (35, 41) desdits couvercles (16, 18).
